# EUROPÄISCHE PATENTSCHRIFT

(11) **EP 0 849 441 B1**
(45) Veröffentlichungstag und Bekanntmachung des Hinweises auf die Patenterteilung: **07.01.2004**
(21) Anmeldenummer: 97121031.5
(22) Anmeldetag: 29.11.1997
(51) Int. Cl.: F01N 3/08, F02D 43/00

(54) **Regelstrategie für einen NOx-Speicher**
Control strategy for NOx-accumulator
Stratégie de commande pour accumulateur de NOx

(30) Priorität: 20.12.1996 DE 19653756
(43) Veröffentlichungstag der Anmeldung: 24.06.1998
(73) Patentinhaber: Dr.Ing.h.c. F. Porsche Aktiengesellschaft, 70435 Stuttgart (DE); Bayerische Motoren Werke Aktiengesellschaft, 80809 München (DE); DaimlerChrysler AG, 70567 Stuttgart (DE)
(72) Erfinder: Huynh, Ngoc-Hoa, Dr., 71229 Leonberg (DE); Salzer, Lorenz K.F., 71277 Rutesheim (DE); Stetter, Ralph, 73630 Remshalden (DE)

(56) Entgegenhaltungen:
- EP-A- 0 598 917
- DE-A- 19 517 168
- PATENT ABSTRACTS OF JAPAN vol. 018, no. 691 (M-1731), 26.Dezember 1994 & JP 06 272546 A (TOYOTA MOTOR CORP), 27.September 1994,
- PATENT ABSTRACTS OF JAPAN vol. 096, no. 012, 26.Dezember 1996 & JP 08 200045 A (TOYOTA MOTOR CORP), 6.August 1996,
- PATENT ABSTRACTS OF JAPAN vol. 018, no. 691 (M-1731), 26.Dezember 1994 & JP 06 272536 A (TOYOTA MOTOR CORP), 27.September 1994,
- PATENT ABSTRACTS OF JAPAN vol. 095, no. 001, 28.Februar 1995 & JP 06 280550 A (TOYOTA MOTOR CORP), 4.Oktober 1994,

## Beschreibung

Die Erfindung betrifft ein Verfahren zum Betreiben eines NOx-Speichers in einem Reduktionskatalysator für eine Brennkraftmaschine.

Aus Bosch Kraftfahrtechnisches Taschenbuch, 22. Aufl. (ESBN 3-18-419122-2), S. 489, sind zur Abgasnachbehandlung katalytische Nachverbrennungen bekannt, die ein Trägermaterial mit aktiver Beschichtung aufweisen und für einen Abbau der giftigen Bestandteile im Abgas sorgen. Hierbei sind Oxidationskatalysatoren bekannt, die entweder durch mageren Motorbetrieb oder durch zusätzliche Lufteinblasungen mit Luftüberschuß betrieben werden, um so CO und HC zu oxidieren. Die Reduktionskatalysatoren arbeiten ohne Lufteinblasung bei Luftmangel und reduzieren die Stickoxide. Ein solcher Reduktionskatalysator ist beispielsweise aus der DE 195 17 168 A1 bekannt. Aus dieser Druckschrift ist eine Vorrichtung und ein Verfahren für die Steuerung eines Verbrennungsmotors bekannt, bei welchem die Emission von Stickstoffoxid in die Atmosphäre unterdrückt werden soll, ohne daß die Weichheit des Motorlaufes und die Kraftstoffausnutzung verschlechtert wird. Hierfür sieht die Steuervorrichtung einen Abgasreinigungskatalysator vor, welcher in einer Auspuffleitung des Motors angeordnet ist, um die Emission von Stickstoffoxid an die Atmosphäre verringert wird, indem der Katalysator derart betrieben wird, daß er Stickstoffoxid adsorbiert, das in den Auspuffgasen enthalten ist, welche vom Motor abgegeben werden, wenn der Motor im Magerverbrennungszustand ist und wobei zum Desoxidieren des adsorbierten Stickstoffes der Motor in einem Fettverbrennungszustand betrieben wird. Hierfür weist die bekannte Einrichtung eine Adsorptionszustandsschätzeinrichtung auf, welche den Adsorptionszustand des Stickstoffoxides im Abgasreinigungskatalysator schätzt.

Bei einer derartigen Motorsteuerung soll ferner der Umschaltvorgang zwischen Betrieb mit Luftüberschuß (Speicherphase) und Betrieb mit Kraftsfoffüberschuß (Regenerationsphase) für den Fahrer nicht wahrnehmbar sein. Die bekannten Verfahren operieren ausnahmslos mit zeitlich gesteuerten Umschaltvorgängen, deren Tastverhältnis, d.h. das Zeitverhältnis zwischen den Betriebsarten, mehr oder weniger aufwendig durch Erfassung der anfallenden NOx - Masse bestimmt wird. Weiterhin sind Strategien bekannt, die mit Hilfe eines NOx-Sensors den Durchbruch des NOx-Speichers bestimmen und bei Bedarf eine Regeneration auslösen.

Die bekannten Verfahren bedingen einen erheblichen Abstimmungsaufwand, besonders bei der Berücksichtigung unterschiedlicher Lastzustände. Darüber hinaus ist die Lebensdauer eines mit den bekannten Verfahren betriebenen NOx-Speichers begrenzt.

Gegenüber diesem Stand der Technik ist es Aufgabe der Erfindung, einen Verfahren zum Betreiben eines NOx-Speichers für eine Brennkraftmaschine zu schaffen, das hinsichtlich der Bestimmung der Zeitanteile der einzelnen Betriebsarten vereinfacht ist und mit dem die Lebesdauer des NOx-Speichers erhöht ist.

Der Erfindung liegt dabei die Erkenntnis zugrunde, daß das Alterungsverhalten der NOx-Speicher in Zusammenhang mit dem Speichervorgang steht. Danach ist der Speichervorgang mit einer Volumenänderung des Speichermaterials verbunden, die in dem mäßig elastischen Festkörper im Laufe der Zeit zu irreversiblen Strukturschäden führt. Außerdem wude festgestellt, daß die NOx-Konversion eines aus NOx-Speicher und nachgeschaltetem Katalysator gebildeten Gesamtsystemes mit zunehmender Speicherfüllung des NOx-Speichers kontinuierlich zurückgeht, so daß zunehmend NOx in die Umgebung gelangt.

Die vorliegende Erfindung sieht vor, die bekannten "makroskopischen" Verfahren zugunsten einer "mikroskopischen" Vorgehensweise aufzugeben, und die Bestimmung der Regenerationsphase auf der Grundlage einzelner Arbeitsspiele der Brennkraftmaschine bestimmt. Die im Stand der Technik etwa eine Sekunde dauernden Regenerationsphasen nach ca. 30 Sekunden Magerbetrieb werden ersetzt durch ein Arbeitsspiel mit Regeneration, z.B. ein fettes Arbeitsspiel, nach einer Abfolge von Arbeitsspielen, in denen NOx gespeichert wird, z.B. mageren Arbeitsspielen.

Ein Arbeitsspiel entspricht vorteilhafterweise einem Verbrennungszyklus der Brennkraftmaschine, d.h. der kleinsten für die Abgasbildung zu betrachtenden Einheit. Je nach Betrachtungsweise ist es alternativ möglich, die Definition eines Arbeitsspieles auch auf der Grundlage anderer Systeme vorzunehmen. So ist es z.B. möglich, die Brennkrafftmaschine als ganzes zu betrachten und ein Arbeitsspiel so zu definieren, daß es von einem Arbeitstakt des ersten Zylinders der Brennkraftmaschine bis zum nächsten Arbeitstakt des ersten Zylinders reicht.

Vorteilhafte Weiterbildungen der Erfindung sind in den Unteransprüchen enthalten.

Zur Regeneration des NOx-Speichers werden verschieden Maßnahmen vorgeschlagen. Die Zumessung des Regenerationsmittels durch Einstellen eines Kraftstoff-Luftgemisches mit Kraftstoffüberschuß kann sehr genau erfolgen. Die Zumessung des Regenerationsmittels durch Erzeugen eines Zündaussetzers ist besonders einfach zu realisieren. Die Zumessung des Regenerationsmittels durch Kraftstoffzumessung kann wiederum sehr genau erfolgen; hierbei ist zusätzlich von Vorteil, daß das regenerationsmittel nicht an dem Verbrennungsvorgang teilnimmt. Schließlich wird zur Zumessung des Regenerationsmittels vorgeschlagen, stromauf des NOx-Speichers eine separate zumeßeinrichtung für ein Reduktionsmittel vorzusehen. Hiermit lassen sich nun auch andere Reduktionsmittel als der zum Betrieb der Brennkraftmaschine verwendete Brennstoff, z.B. Ammoniak, zuführen.

Die Anzahl der Arbeitsspiele, in denen NOx gespeichert wird, die vor dem Arbeitsspiel mit Regeneration ausführbar sind, hängt vom Brennverfahren der Brennkraftmaschine, sowie der Bauart und dem Volumen des Katalysators ab. Damit ändert sich an der Energiebilanz des Betriebes nichts, sodaß gegenüber dem Stand der Technik kein Verbrauchsnachteil entsteht. Demgegenüber wird der NOx-Speicher nur minimal, vorzugsweise im wesentlichen unterhalb von 10% seines Speichervolumens, belastet, was oben beschriebenen Alterungsvorgang ausschließt. Ferner arbeitet der nachgeschaltete Katalysator die meiste Zeit in einem Befüllungszustand, bei dem hohe Umsetzungsraten auf dem Niveau eines Dreiwegekatalysators gewährleistet sind. Da bei der hohen Regenerationsfrequenz die Wahrscheinlichkeit sehr groß ist, daß im Arbeitsspiel mit Regeneration derselbe Luftmassendurchsatz wie im Arbeitsspiel mit NOx-Speicherung herrscht, kann eine Betrachtung der Emissionsmassen unterbleiben, da das Verhältnis NOx-Speicherung zu Regeneration bei allen Lastzuständen der Brennkraftmaschine konstant bleibt. Im besonders einfacher Weise ist es daher möglich, das zur Regeneration erforderliche Arbeitsspiel auf eine feste Zahl von Arbeitsspielen mit NOx-Speicherung folgen zu lassen.

Geringfügige Abweichungen im Dynamikfall gleicht das im Vergleich zur tatsächlichen Beladung große Volumen des NOx-Speichers aus. Bei Betrieb mit Lambda = 1 oder fetter, wie er im Leerlauf aus Fahrverhaltensgründen oder bei Vollast aus Leistungsgründen auftritt, wird das ganze System in den Zustand mit völlig entleertem Speicher zurückversetzt.

Die Abgasführung zwischen Auslassventil und Katalysator ist so zu gestalten, daß eine Vermischung aufeinanderfolgender Zylinderinhalte und damit eine Verminderung der Konnzentration des Regenerationsmittels ausgeschlossen ist. Das ist durch einen Rohrkrümmer mit Zusammenführung unmittelbar vor dem Katalysator bei ständig wechselnden Regenerationszylindern zu erreichen. Es sind aber auch Konfigurationen denkbar, bei denen die Regeneration immer demselben Zylinder übertragen wird. Dort genügt es, die Abgasführung für diesen Zylinder bis zum Katalysator getrennt auszuführen. Die Erfindung ist sowohl für Diesel-Brennkraftmaschinen wie auch für Otto-Brennkraftmaschinen anwendbar.

Alternativ oder ergänzend kann es bei Brennkraftmaschinen mit großer Zylinderzahl und entsprechender Überdeckung der Auslassphasen der Einzelzylinder erforderlich sein, anstatt eines einzelnen Arbeitsspiels zur Regeneration zwei oder mehr in der Zündfolge aufeinander folgende Arbeitsspiele zur Regeneration zu verwenden, um eine Vermischung aufeinanderfolgender Zylinderinhalte verschiedener Zylinder ausgzuschließen. Dabei erhöht sich die Anzahl von dazwischengeschalteten Arbeitsspielen mit NOx-Speicherung entsprechend.

Schließlich hängt die Anzahl der zur Regeneration notwendigen Arbeitsspiele zusätzlich von der Trägheit des NOx-Speichers und der Trägheit des Katalysators ab, so daß auch aus diesem Grund zwei oder mehr in der Zündfolge aufeinander folgende Arbeitsspiele zur Regeneration erforderlich sein können.

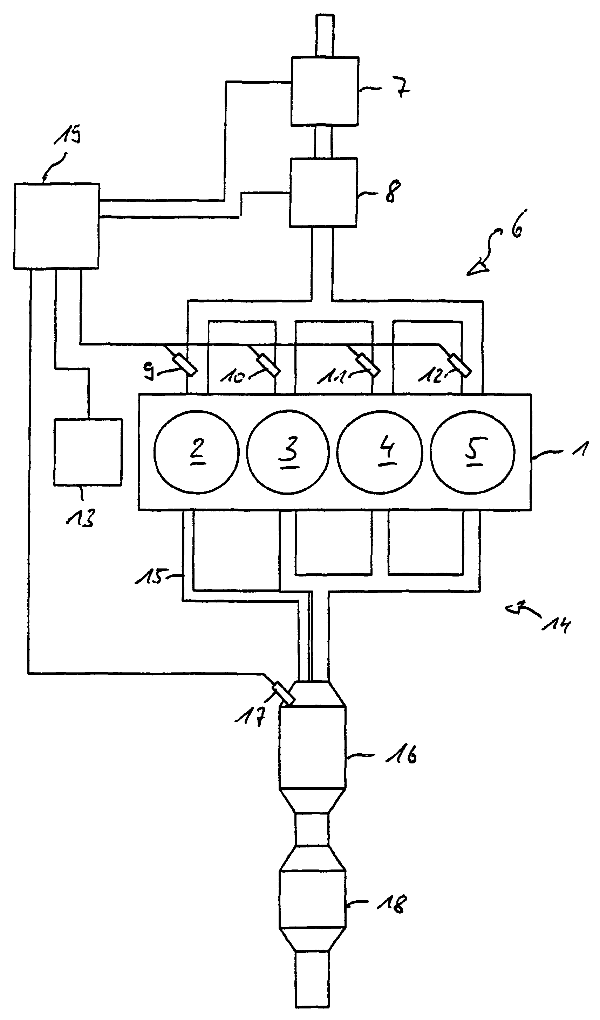

Die Erfindung ist nachstehend anhand des in der einzigen Figur dargestellten Ausführungsbeispieles näher erläutert.

Eine Brennkraftmaschine 1 mit vier Zylindern 2 bis 5 weist eine Ansauganlage 6 mit einem Luftmassengeber 7 und einem Drosselklappengeber 8 auf. Vor den einzelnen Zylindern 2 bis 5 sind Einspritzventile 9 bis 12 zur Kraftstoffzumessung angeordnet. An den Brennkraftmaschine 1 ist ferner ein Kurbelwellengeber 13 vorgesehen.

Abgasseitig wiest die Brennkraftmaschine 1 eine Abgasanlage 14 auf, in der für den ersten Zylinder 2 eine separate Abgasführung 15 vorgesehen ist. Die separate Abgasführung 15 mündet zusammen mit dem weiteren Teil der Abgasanlage 14 in einen NOx-Speicher 16. Im Einlaufbereich des NOx-Speichers 16 ist eine Sonde 17 angeordnet, die den Sauerstoffüberschuß im Abgas bestimmt. Dem NOx-Speicher 16 ist schließlich ein Katalysator 18 nachgeschaltet.

Ein Steuergerät 19 erhält die Signale des Luftmassengebers 6, des Drosseklappengebers 7, des Kurbelwellengebers 13 und der Sonde 17. Das Steuergerät 19 steuert über die Einspitzdüsen 9 bis 12 zylinderindividuell die Kraftstoffzumessung zur Brennkraftmaschine 1.

Im Betrieb, d.h. bei betriebswarmer Brennkraftmaschine 1 und normaler Betriebsweise außerhalb der Maximalzustände wie z.B. Leerlauf oder Vollast, erfolgt die Kraftstoffzumessung über das Steuergerät 19 in der Weise, daß die Brennkraftmaschine 1 mit Luftüberschuß betrieben wird. Bei dieser ersten Betriebsart nimmt der NOx-Speicher 16 aus dem Abgas NOx auf.

Das Steuergerät 19 erfaßt zur Steuerung der Beladung des NOx-Speichers 16 die Anzahl der Arbeitsspiele, hier die Anzahl der Verbrennungszyklen, der Brennkraftmaschine 1: bei einer Umdrehung der nicht gezeigten Kurbelwelle der Brennkraftmaschine 1 werden zwei Verbrennungszyklen abgeschlossen, also zwei Arbeitsspiele gezählt. Bei jedem achtundzwanzigsten Arbeitsspiel, wobei über alle Zylinder 2 bis 5 gezählt wird, erhöht das Steuergerät 19 die dem ersten Zylinder 2 zugeführte Kraftstoffmenge, so daß hier bei dem darauffolgenden Arbeitsspiel der erste Zylinder 2 mit Kraftstoffüberschuß arbeitet und unverbrannten Kraftstoff in die separate Abgasführung 15 einleitet. Dieses Abgasvolumen gelangt über die separate Abgasführung 15 unvermischt zum NOx-Speicher 16, der in Folge der Konzentrationsänderung der Abgasbestandteile nun das gespeicherte NOx abgibt. Das derart freigesetzte NOx gelangt nachfolgend zusammen mit dem unverbrannten Kraftstoff in den Katalysator 18 und wird hier reduziert.

## Patentansprüche

1. Steuervorrichtung zum Betreiben eines NOx-Speichers für eine Brennkraftmaschine, wobei die Steuervorrichtung die Zumessung eines Regenerationsmittels bestimmt, **dadurch gekennzeichnet, daß** die Steuervorrichtung die Zumessung des Regenerationsmittels auf der Grundlage einzelner Arbeitsspiele der Brennkraftmaschine bestimmt und daß die Bestimmung der Zumessung des Regenerationsmittels nach einer vorgegebenen Anzahl von Arbeitsspielen der Brennkraftmaschine erfolgt.

2. Steuervorrichtung nach Anspruch 1, **dadurch gekennzeichnet, daß** ein Arbeitsspiel ein Verbrennungszyklus der Brennkraftmaschine ist.

3. Steuervorrichtung nach Anspruch 1 oder 2, **dadurch gekennzeichnet, daß** zur Zumessung des Regenerationsmittels ein Verbrennungstakt der Brennkraftmaschine mit Kraftstoffüberschuß erfolgt.

4. Steuervorrichtung nach Anspruch 1 oder 2, **dadurch gekennzeichnet, daß** zur Zumessung des Regenerationsmittels während eines Verbrennungstaktes kein Zündfunken erzeugt wird.

5. Steuervorrichtung nach Anspruch 1 oder 2, **dadurch gekennzeichnet, daß** zur Zumessung des Regenerationsmittels eine Kraftstoffzumessung während eines Auslasstaktes erfolgt.

6. Steuervorrichtung nach Anspruch 1 oder 2, **dadurch gekennzeichnet, daß** zur Zumessung des Regenerationsmittels eine Zumeßvorrichtung vorgesehen ist, die das Regenerationsmittel stromauf des NOx-Speicher in den Abgasstrom der Brennkraftmaschine zumißt.

7. Steuervorrichtung nach einem der vorstehenden Ansprüche, **dadurch gekennzeichnet, daß** die Regeneration des NOx-Speichers im wesentlichen dann erfolgt, bevor 10% der Speicherkapazität des NOx-Speichers ausgenutzt sind.

8. Steuervorrichtung nach einem der vorstehenden Ansprüche, **dadurch gekennzeichnet, daß** in einer Abgasanlage der Brennkraftmaschine die Abgasführung zwischen der Brennkraftmaschine und dem NOx-Speicher so gestaltet ist, daß eine Vermischung aufeinanderfolgender Zylinderinhalte verschiedener Zylinder ausgeschlossen ist.

9. Steuervorrichtung nach Anspruch 8, **dadurch gekennzeichnet, daß** in der Abgasanlage der Brennkraftmaschine ein getrennter Abgasstrang zumindest für den zur Zumessung des Regenerationsmittels verwendeten Zylinder vorgesehen ist.

10. Steuervorrichtung nach einem der vorstehenden Ansprüche, **dadurch gekennzeichnet, daß** die Anzahl der Arbeitsspiele, während denen das Regenerationsmittel zugeführt wird, so gewählt ist, daß im wesentlichen eine Vermischung aufeinanderfolgender Zylinderinhalte verschiedener Zylinder ausgeschlossen ist.

## Claims

1. A control device for operating an NOₓ accumulator for an internal-combustion engine, wherein the control device determines the metering of a regeneration agent, **characterized in that** the control device determines the metering of the regeneration agent on the basis of individual operating cycles of the internal-combustion engine, and the metering of the regeneration agent is determined in accordance with a pre-set number of operating cycles of the internal-combustion engine.

2. A control device according to Claim 1, **characterized in that** an operating cycle is a combustion cycle of the internal-combustion engine.

3. A control device according to Claim 1 or 2, **characterized in that** in order to meter the regeneration agent a combustion stroke of the internal-combustion engine takes place with an excess of fuel.

4. A control device according to Claim 1 or 2, **characterized in that** in order to meter the regeneration agent no ignition spark is produced during a combustion stroke.

5. A control device according to Claim 1 or 2, **characterized in that** in order to meter the regeneration agent a metering of the fuel takes place during an exhaust stroke.

6. A control device according to Claim 1 or 2, **characterized in that** in order to meter the regeneration agent a metering device is provided which admixes the regeneration agent into the exhaust-gas flow of the internal-combustion engine upstream of the NOₓ accumulator.

7. A control device according to one of the preceding Claims, **characterized in that** the regeneration of the NOₓ accumulator takes place substantially before 10% of the storage capacity of the NOₓ accumulator is used up.

8. A control device according to one of the preceding Claims, **characterized in that** the guidance of the exhaust gas between the internal-combustion engine and the NOₓ accumulator is arranged in an exhaust-gas system of the internal-combustion engine in such a way that mixing of successive contents of different cylinders is eliminated.

9. A control device according to Claim 8, **characterized in that** a separate exhaust-gas train is provided in the exhaust-gas system of the internal-combustion engine, at least for the cylinder used for the metering of the regeneration agent.

10. A control device according to one of the preceding Claims, **characterized in that** the number of the operating cycles during which the regeneration agent is supplied is selected in such a way that mixing of successive contents of different cylinders is substantially eliminated.

## Revendications

1. Dispositif de commande pour faire fonctionner un accumulateur de NOx pour un moteur à combustion interne, le dispositif de commande déterminant l'ajout mesuré d'un agent régénérant, **caractérisé en ce que** le dispositif de commande détermine l'ajout mesuré de l'agent régénérant sur la base de différentes manoeuvres du moteur à combustion interne, et **en ce que** la détermination de l'ajout de l'agent régénérant s'effectue selon un nombre prédéfini de manoeuvres du moteur à combustion interne.

2. Dispositif de commande selon la revendication 1, **caractérisé en ce qu'**une manoeuvre est un cycle de combustion du moteur à combustion interne.

3. Dispositif de commande selon la revendication 1 ou 2, **caractérisé en ce que** pour l'ajout mesuré de l'agent régénérant une phase de combustion du moteur à combustion interne s'effectue avec un excédent de carburant.

4. Dispositif de commande selon la revendication 1 ou 2, **caractérisé en ce que** pour l'ajout mesuré de l'agent régénérant, il n'est produit aucune étincelle d'allumage pendant une cycle de combustion.

5. Dispositif de commande selon la revendication 1 ou 2, **caractérisé en ce que** pour l'ajout mesuré de l'agent régénérant, un ajout mesuré de carburant s'effectue pendant une phase d'échappement.

6. Dispositif de commande selon la revendication 1 ou 2, **caractérisé en ce que** pour l'ajout mesuré de l'agent régénérant, il est prévu un dispositif d'ajout qui ajoute de manière mesurée de l'agent régénérant en amont de l'accumulateur NOx dans le courant des gaz d'échappement du moteur à combustion interne.

7. Dispositif de commande selon l'une des revendications précédentes, **caractérisé en ce que** la régénération de l'accumulateur NOx s'effectue pour l'essentiel avant que 10 % de la capacité d'accumulation de l'accumulateur NOx soient utilisés.

8. Dispositif de commande selon l'une des revendications précédentes, **caractérisé en ce que** dans un système de gaz d'échappement du moteur à combustion interne, la conduite des gaz d'échappement entre le moteur à combustion interne et l'accumulateur NOx est conçue de manière à exclure que les contenus successifs de différents cylindres soient mélangés.

9. Dispositif de commande selon la revendication 8, **caractérisé en ce que** dans le système des gaz d'échappement du moteur à combustion interne, il est prévu une ligne séparée des gaz d'échappement au moins pour le cylindre utilisé pour l'ajout mesuré de l'agent régénérant.

10. Dispositif de commande selon l'une des revendications précédentes, **caractérisé en ce que** le nombre de manoeuvres pendant lesquelles l'agent régénérant est amené, est choisi de manière à exclure pour l'essentiel un mélange de contenus successifs de différents cylindres.
